Europäisches Patentamt

European Patent Office

Office européen des brevets

(19)

(11) **EP 0 882 323 B1**

(12) **FASCICULE DE BREVET EUROPEEN**

(45) Date de publication et mention
de la délivrance du brevet:
**04.02.2004 Bulletin 2004/06**

(21) Numéro de dépôt: **97947141.4**

(22) Date de dépôt: **27.11.1997**

(51) Int Cl.⁷: **H02M 7/00**, H02M 7/219

(86) Numéro de dépôt international:
**PCT/FR1997/002132**

(87) Numéro de publication internationale:
**WO 1998/024172 (04.06.1998 Gazette 1998/22)**

(54) **DISPOSITIF DE REDRESSEMENT DE TENSION A COMPOSANTS INTEGRES**

GLEICHRICHTERVORRICHTUNG MIT INTEGRIERTEN BAUSTEINEN

DEVICE FOR RECTIFYING VOLTAGE WITH INTEGRATED COMPONENTS

(84) Etats contractants désignés:
**BE DE ES GB IT NL**

(30) Priorité: **29.11.1996 FR 9614705**

(43) Date de publication de la demande:
**09.12.1998 Bulletin 1998/50**

(73) Titulaire: **FRANCE TELECOM**
**75015 Paris (FR)**

(72) Inventeur: **BOUVIER, Jacky**
**F-38240 Meylan (FR)**

(74) Mandataire: **Casalonga, Axel**
**BUREAU D.A. CASALONGA - JOSSE**
**Paul-Heyse-Strasse 33**
**80336 München (DE)**

(56) Documents cités:
**EP-A- 0 052 860**          **WO-A-96/28879**
**US-A- 4 139 880**

• **PATENT ABSTRACTS OF JAPAN vol. 012, no.
287 (E-643), 5 août 1988 & JP 63 064572 A
(TAMURA ELECTRIC WORKS LTD), 23 mars
1988,**
• **PATENT ABSTRACTS OF JAPAN vol. 012, no.
204 (E-620), 11 juin 1988 & JP 63 003655 A
(KANDA TSUSHIN KOGYO KK), 8 janvier 1988,**

**Description**

L'invention concerne le redressement de tension, notamment dans le domaine des ondes radiofréquence.

L'invention trouve une application avantageuse mais non limitative dans le domaine des objets portatifs capables, lors d'une coopération à distance avec un terminal, de récupérer de l'énergie, par exemple à partir du champ magnétique généré par le terminal, et ce pour des fréquences pouvant aller d'une centaine de kHz à plusieurs dizaines de MHz.

On connaît par l'enregistrement statutaire d'invention aux Etats-Unis n° H64 publié le 6 mai 1986, un redresseur double alternance réalisé en technologie intégrée avec deux transistors à effet de champ à grilles isolées à canal N (transistor NMOS) et deux diodes. Cependant, un tel redresseur présente des problèmes de fonctionnement lorsque la fréquence de la tension alternative d'entrée dépasse quelques centaines de kHz en raison des mauvaises caractéristiques de commutation des diodes.

On pourra également se référer au document JP-A-63 064 572 qui décrit l'utilisation de transistors à effet de champ montés en diode pour la réalisation d'un redresseur.

Le brevet américain n° 5 479 172 décrit un redresseur comportant quatre transistors NMOS dont deux sont montés en diode. L'inconvénient majeur de ce redresseur réside dans l'importance de la tension de déchet, c'est-à-dire la différence entre la tension d'entrée et la tension de sortie aux bornes du redresseur.

L'invention vise à apporter une solution à ces problèmes.

L'invention vise notamment à résoudre le problème du temps de commutation des diodes tout en minimisant la tension de déchet, de façon à permettre en particulier un fonctionnement correct à fréquence élevée.

L'invention propose un dispositif de redressement de tension suivant les revendications 1 et 4.

L'invention propose donc un dispositif de redressement de tension, comportant deux bornes d'entrée pour une tension alternative, des moyens de redressement réalisés en technologie intégrés au sein d'un substrat semi-conducteur, et deux bornes de sortie pour une tension redressée, l'une de ces bornes de sortie étant prise au niveau du substrat.

Selon une caractéristique générale de l'invention, les moyens de redressement comprennent une paire de premiers transistors à effet de champ à grilles isolées agencés pour fonctionner en éléments redresseurs, avec l'une de leurs électrodes drain ou source reliée au substrat, et une paire de deuxièmes transistors à effet de champ à grilles isolées respectivement disposés dans des caissons semi-conducteurs polarisés avec les grilles reliées croisées sur les deux bornes d'entrée, les premier et deuxième transistors ayant des canaux de types opposés et une tension drain/source en conduction inférieure à une tension prédéterminée.

Si les premiers transistors, par exemple des transistors NMOS, présentent une largeur de canal suffisante pour que la tension grille/source reste inférieure en conduction à ladite tension prédéterminée, en l'espèce la tension de seuil d'une diode, l'agencement de ces transistors en redresseur peut être réalisé simplement en montant ces transistors en diode, c'est-à-dire en reliant la grille à l'une de leurs électrodes, par exemple le drain. Dans un tel mode de réalisation, prévoyant que les premiers transistors ont leurs drains reliés au substrat et leurs grilles reliées à leurs drains respectifs, les sources de ces deux premiers transistors, montées en diode, sont respectivement reliées aux deux bornes d'entrée du dispositif de redressement de tension.

Le fait d'avoir une tension drain/source (ou grille/source puisque la grille est reliée au drain) inférieure en conduction à la tension de seuil de la diode parasite source/substrat, contribue au bon fonctionnement du redresseur en shuntant efficacement cette diode de diffusion, ce qui en d'autres termes évite qu'une partie du courant ne circule dans cette diode parasite.

Si la technologie utilisée ne permet pas d'avoir des tensions grille/source en conduction assez faibles pour une largeur raisonnable des transistors, l'agencement des premiers transistors en redresseur peut être effectué en reliant l'une des électrodes drain ou source des premiers transistors au substrat et en reliant les grilles de ces premiers transistors à une tension de polarisation choisie qui est avantageusement inférieure à la tension de seuil intrinsèque de chaque premier transistor (c'est-à-dire la tension de seuil du transistor pour une tension source/substrat égale à 0 volt) de façon que ceux-ci restent suffisamment bloqués pendant les périodes de non-conduction.

En pratique, notamment lorsque les moyens de redressement sont réalisés en technologie intégrée CMOS 1 micron (1 micron désignant la longueur des canaux des transistors), voire une technologie CMOS 0,5 micron, la tension de polarisation est choisie comprise entre quelques centaines de millivolts, par exemple 400 millivolts, et une limite supérieure égale à la tension de seuil intrinsèque du transistor diminuée de quelques centaines de millivolts, par exemple 400 millivolts.

Le fait d'utiliser des transistors montés en élément redresseur au lieu de diodes classiques, permet de faire fonctionner le redresseur de façon correcte même à des fréquences élevées, par exemple quelques dizaines de MHz. En outre, puisque l'une des électrodes de ces premiers transistors (le drain par exemple) est reliée au substrat, et que le potentiel de l'autre électrode (source par exemple) est négatif par rapport à celui du substrat pendant les périodes de conduction, la tension de déchet est minimisée par la minimisation d'un effet bien connu de l'homme du métier sous la dénomination d'"effet substrat".

En ce qui concerne les deuxièmes transistors, par exemple des transistors PMOS, le fait que leur tension drain/source en conduction soit inférieure à une tension prédéterminée, avantageusement prise égale à une tension de seuil d'une diode, par exemple 0,7 volt, et en pratique 0,6 volt, notamment lorsque les moyens de redressement sont réalisés en technologie intégrée CMOS 1 micron, voire 0,5 micron, permet de conserver toujours le blocage des transistors parasites PNP verticaux résultant d'une telle structure, ce qui contribue au bon rendement du redresseur.

En outre, en polarisant les caissons semi-conducteurs contenant ces deuxièmes transistors, par exemple en les reliant à l'autre borne de sortie, on évite des effets de verrouillage ("latch-up" en langue anglaise) de ces transistors en conduction entre le caisson et le substrat.

D'autres avantages et caractéristiques de l'invention apparaîtront à l'examen de modes de réalisation nullement limitatifs, et des dessins annexés, sur lesquels :

la figure 1 illustre schématiquement un premier mode de réalisation d'un redresseur selon l'invention,
la figure 2 illustre schématiquement la réalisation en technologie intégrée du dispositif de la figure 1, et
les figures 3 et 4 illustrent schématiquement un deuxième mode de réalisation d'un redresseur selon l'invention.

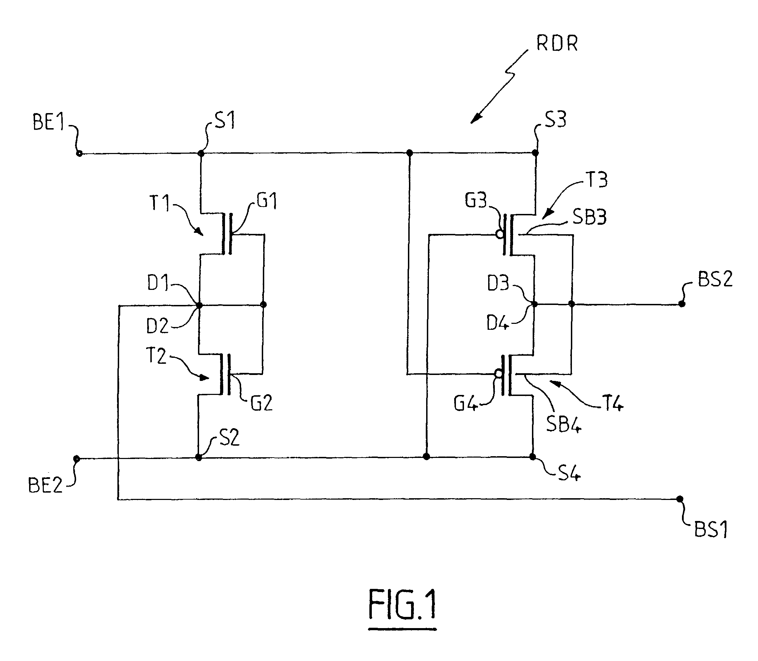

Sur la figure 1, la référence RDR désigne globalement un premier mode de réalisation d'un redresseur double alternance selon l'invention.

Ce redresseur comporte deux bornes d'entrée BE1 et BE2 pour recevoir un signal alternatif (carré, sinusoïdal, ou de toute autre forme) et deux bornes de sortie BS1 et BS2 pour délivrer un signal redressé continu.

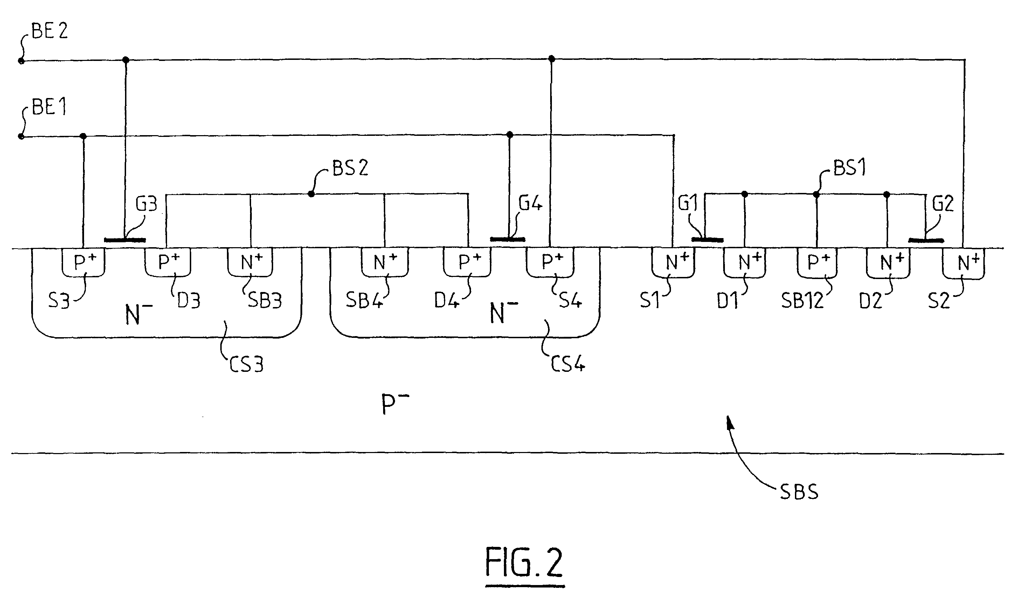

L'une de ces bornes de sortie, par exemple la borne BS1 est prise au niveau du substrat semi-conducteur SBS (figure 2) au sein duquel est réalisé le redresseur.

Entre les bornes d'entrée et les bornes de sortie sont prévus des moyens de redressement comportant une paire de premiers transistors à effet de champ à grilles isolées, respectivement référencés T1 et T2, et une paire de deuxièmes transistors à effet de champ à grilles isolées, respectivement référencés T3 et T4.

Dans la suite de la description, en ce qui concerne les transistors à effet de champ à grille isolée, on a différencié à des fins de simplification les électrodes des transistors autres que la grille en utilisant les termes source et drain. Néanmoins, l'homme du métier sait que dans ce type de technologie les transistors sont réalisés de façon symétrique en ce qui concerne le comportement de leurs deux électrodes source et drain, si bien que l'on pourrait sans difficulté intervertir les dénominations source et drain.

Sur le montage de la figure 1, les deux transistors T1 et T2 ont leurs sources respectives S1 et S2 reliées aux deux bornes d'entrée BE1 et BE2. En outre, ces transistors sont montés en diodes, c'est-à-dire qu'ils ont leur autre électrode, à savoir leurs drains D1, D2 respectivement reliés aux grilles G1 et G2.

Par ailleurs, les deux drains D1 et D2, et par conséquent les deux grilles G1 et G2, sont directement reliés à la borne de sortie BS1, c'est-à-dire reliés au substrat semi-conducteur.

Alors que cette paire de premiers transistors est formée de transistors NMOS, la paire des deuxièmes transistors T3 et T4 est formée de transistors PMOS.

Ces deuxièmes transistors ont leurs grilles respectives G3 et G4 reliées croisées sur les deux bornes d'entrée BE2 et BE1. La source S3 du transistor T3 est par ailleurs reliée à la borne d'entrée BE1, tandis que la source S4 du transistor T4 est reliée à la borne d'entrée BE2 et que les drains D3 et D4 sont reliés ensemble à la deuxième borne de sortie BS2.

Comme on le voit plus particulièrement sur la figure 2, ces deux transistors T3 et T4 sont disposés respectivement dans deux caissons semi-conducteurs CS3 et CS4, ici des caissons semi-conducteurs dopés N⁻. Les substrats de ces deux transistors sont polarisés et reliés à la borne de sortie BS2 par l'intermédiaire d'une zone de substrat (ou de caisson) surdopée N⁺ et référencée SB3 pour le transistor T3, et SB4 pour le transistor T4.

Comme on le voit par ailleurs sur cette figure 2, la première borne de sortie BS1 est reliée au substrat semi-conducteur SBS, dopé P⁻ dans le cas présent, par l'intermédiaire d'une zone de substrat SB12 surdopée P⁺.

La tension drain/source de chacun des transistors T3 et T4 en conduction est inférieure à la tension de seuil de la diode base-émetteur du transistor PNP vertical parasite résultant de la structure décrite, et ce de façon à toujours conserver ce transistor parasite bloqué.

L'homme du métier, qui sait que la tension drain/source d'un transistor en conduction est fonction du rapport W/L (où W désigne la largeur du canal et L la longueur du canal, c'est-à-dire la distance drain-source), de la valeur du courant de conduction et de paramètres liés à la technologie employée, saura aisément dimensionner les transistors T3 et T4 de façon à respecter cette condition. En pratique, on choisira de préférence une tension drain/source en conduction inférieure à 0,6 volt. Ceci pourra être obtenu en utilisant des transistors de largeur de canal égale à 500 microns environ pour des courants instantanés de l'ordre du milliampère et en utilisant une technologie CMOS 1 micron, cette dernière valeur désignant la longueur des canaux des transistors.

En ce qui concerne les transistors NMOS T1 et T2, la largeur de leur canal a été choisie suffisamment grande pour que leur tension grille/source en conduction (donc leur tension drain/source en conduction puisque la grille et le drain sont reliés) reste inférieure à la tension de seuil de la diode de diffusion parasite source/substrat de chacun de ces transistors. Si tel n'était pas le cas, une partie du courant de conduction circulerait via cette diode de diffusion, réduisant en conséquence le rendement du redresseur.

En pratique, on dimensionne les transistors de façon à avoir une tension grille/source en conduction inférieure à 0,6 volt, ce qui peut être obtenu, dans une technologie CMOS 0,5 micron avec des largeurs de canal de l'ordre de 300 à 500 microns pour des courants de l'ordre du milliampère.

Par ailleurs, pendant la conduction de chaque transistor T1 et T2, le potentiel de sa source devient négatif par rapport à celui du substrat. La diode de diffusion source/substrat se trouve donc polarisée en direct. Or, la tension de seuil VT du transistor suit la loi physique

$$VT = VT0 + KB \left( \sqrt{VSB + 2\varnothing f} - \sqrt{2\varnothing f} \right)$$

où VT0 désigne la tension de seuil intrinsèque du transistor pour une tension source/substrat nulle,

VSB désigne la tension source/substrat,

KB et $2\varnothing f$ étant des paramètres donnés par la technologie,

(à titre d'exemple : VT0 = 0,65 volt, KB = 0,7 $2\varnothing f$ = 0,63 pour une technologie CMOS 1 micron).

En conséquence, la tension de seuil VT voit sa valeur diminuer pendant la conduction du transistor, favorisant ainsi le passage du courant dans le canal du transistor au détriment du courant dans la diode de diffusion source/substrat.

L'homme du métier sait que l'effet substrat d'un transistor, produit par une valeur VSB positive et non nulle, conduit à une augmentation de la tension de seuil.

Cet effet substrat, qui est maximal au niveau des transistors montés en diodes du brevet américain n° 5479172 en raison du fait que leurs sources sont reliées au potentiel positif de sortie, est minimisé dans le redresseur selon l'invention et contribue donc à réduire la tension de déchet.

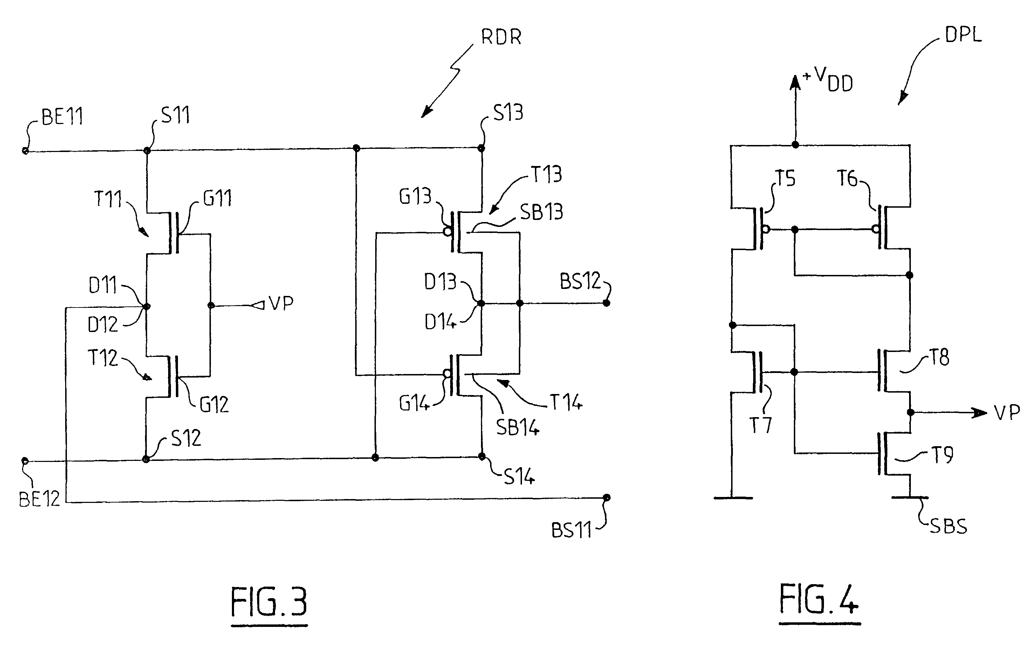

Si la technologie utilisée ne permet pas d'avoir des tensions grille/source en conduction assez faibles pour une largeur raisonnable des transistors, l'homme du métier pourra utiliser le mode de réalisation illustré sur la figure 3.

Sur cette figure 3, les éléments analogues ou ayant des fonctions analogues à ceux décrits sur les figures 1 et 2, ont des références dont les chiffres ont été augmentés de 10 par rapport à ceux des figures 1 et 2. Seules les différences entre cette figure 3 et les figures 1 et 2 seront maintenant décrites.

Sur la figure 3, les deux transistors T11 et T12 qui sont montés en redresseur, ne sont pas cette fois-ci montés en diodes conformément au schéma de la figure 1, mais ont leurs grilles respectives G11 et G12 reliées à une tension de polarisation choisie VP. Cette tension de polarisation, qui se retranche à la tension de seuil des transistors T11 et T12, sera choisie inférieure à la tension de seuil intrinsèque VT0 de ces transistors, de sorte que la tension source/substrat, c'est-à-dire en l'espèce la tension source/drain de ces transistors, reste inférieure en conduction à la tension de seuil de la diode de diffusion parasite source/substrat. Dans le cas où la tension de polarisation des grilles des transistors dépasserait la tension de seuil VT0 de ces transistors, ceux-ci ne resteraient pas suffisamment bloqués pendant les périodes de non-conduction.

En pratique, on pourra choisir une tension de polarisation égale à quelques centaines de millivolts, typiquement 0,5 volt. Cette tension de polarisation pourra être directement prise (si elle est disponible) au niveau des autres parties du circuit intégré incorporant le redresseur. Si cette tension n'est pas directement disponible, on pourra prévoir un dispositif de polarisation tel que celui illustré sur la figure 4.

Sur cette figure 4, le dispositif de polarisation DPL comporte deux transistors PMOS T5 et T6 dont les sources sont reliées à la tension d'alimentation + VDD. Les grilles de ces deux transistors sont reliées ensemble. La grille du transistor T6 est reliée au drain.

Le drain du transistor T5 est relié au substrat par l'intermédiaire d'un transistor NMOS T7 dont la grille est reliée au drain. Le drain du transistor T6 est relié au substrat par l'intermédiaire de deux transistors NMOS T8 et T9, le drain de T9 étant relié à la source de T8. La tension de polarisation VP est prise au niveau de cette borne commune.

Les grilles des transistors T7 et T8 sont reliées ensemble de même que les grilles des transistors T7 et T9.

Des tests comparatifs entre le dispositif selon l'invention et le redresseur du brevet américain précité ont montré que pour une tension alternative sinusoïdale d'entrée de ± 5 volts, on obtenait une tension redressée de 3,3 volts environ avec le redresseur de l'art antérieur et une tension redressée de 4,2 volts environ avec le redresseur selon l'invention, ce qui correspond à une différence de 22% en faveur du redresseur selon l'invention.

La description qui précède est relative à des dispositifs utilisant des substrats dopés P ou de type P. Bien entendu, dans le cas de substrats dopés N ou de type N, il convient de remplacer les transistors NMOS par des transistors PMOS et réciproquement, et d'inverser également les signes des tensions et le sens des diodes de diffusion.

**Revendications**

1. Dispositif de redressement de tension, comportant deux bornes d'entrée (BE1, BE2) pour une tension alternative, des moyens de redressement réalisés en technologie intégrée au sein d'un substrat semi-conducteur (SBS), et deux bornes de sortie (BS1, BS2) pour une tension redressée, l'une de ces bornes de sortie (BS1) étant prise au niveau du substrat, les moyens de redressement comprennant une paire de premiers transistors à effet de champ à grilles isolées (T1, T2) montés en diode et en série entre les deux bornes d'entrée avec l'une de leurs électrodes (D1, D2) reliée au substrat, et une paire de deuxièmes transistors à effet de champ à grilles isolées (T3, T4), la source de l'un des deuxièmes transistors et la grille de l'autre deuxième transistor étant reliées à l'une des borne d'entrée, la grille de l'un des deuxièmes transistors et la source de l'autre deuxième transistor étant reliées à l'autre borne d'entrée, les drains des deux deuxièmes transistors étant reliés ensemble à la deuxième borne de sortie, **caracterisé en ce que** les deuxièmes transistors sont respectivement disposés dans des caissons semi-conducteurs polarisés (CS3, CS4) les premiers et deuxièmes transistors ayant des canaux de types opposés et chaque transistor ayant une tension drain/source en conduction inférieure à une tension de seuil d'une diode parasite associée au même transistor.

2. Dispositif selon la revendication 1, **caractérisé par le fait que** les premiers transistors (T1, T2) ont leurs drains (D1, D2) reliés au substrat (SBS) et leurs grilles (G1, G2) reliées à leurs drains respectifs, tandis que leurs sources (S1, S2) sont respectivement reliées aux deux bornes d'entrée (BE1, BE2).

3. Dispositif selon la revendication 1 ou 2, **caractérisé par le fait que** la largeur des canaux des premiers transistors est au moins égale à 300 microns.

4. Dispositif de redressement de tension, comportant deux bornes d'entrée (BE11, BE12) pour une tension alternative, des moyens de redressement réalisés en technologie intégrée au sein d'un substrat semi-conducteur (SBS), et deux bornes de sortie (BS11, BS12) pour une tension redressée, l'une de ces bornes de sortie (BS11) étant prise au niveau du substrat, les moyens de redressement comprennant une paire de premiers transistors à effet de champ à grilles isolées (T11, T12) et une paire de deuxièmes transistors à effet de champ à grilles isolées (T13, T14), la source de l'un des deuxièmes transistors et la grille de l'autre deuxième transistor étant reliées à l'une des borne d'entrée, la grille de l'un des deuxièmes transistors et la source de l'autre deuxième transistor étant reliées à l'autre borne d'entrée, les drains des deux deuxièmes transistors étant reliés ensemble à la deuxième borne de sortie, **caracterisé en ce que** les premiers transistors ont l'une de leurs électrodes drain ou source reliée au substrat et leurs grilles reliées à une tension de polarisation choisie (VP), et **en ce que** les deuxièmes transistors sont respectivement disposés dans des caissons semi-conducteurs polarisés, les premiers et deuxièmes transistors ayant des canaux de types opposés et une tension drain/source en conduction inférieure à une tension de seuil d'une diode parasite associée au même transistor.

5. Dispositif selon la revendication 4, **caractérisé par le fait que** les premiers transistors (T11, T12) ont leurs drains reliés au substrat et leurs sources respectivement reliées aux deux bornes d'entrée.

6. Dispositif selon la revendication 5, **caractérisé par le fait que** la tension de polarisation (VP) choisie est inférieure à la tension de seuil intrinsèque de chaque premier transistor.

7. Dispositif selon la revendication 6, **caractérisé par le fait que** la tension de polarisation (VP) choisie est comprise entre quelques centaines de millivolts, par exemple 400 millivolts, et une limite supérieure égale à la tension de seuil intrinsèque du premier transistor diminuée de quelques centaines de millivolts, par exemple 400 millivolts.

8. Dispositif selon l'une des revendications précédentes, **caractérisé par le fait que** les caissons des deuxièmes transistors sont reliés à l'autre borne de sortie (BS2).

9. Dispositif selon l'une des revendications précédentes, **caractérisé par le fait que** la tension prédéterminée est prise égale à une tension de seuil d'une diode, par exemple 0,7 volt.

10. Dispositif selon l'une des revendications précédentes, **caractérisé par le fait que** la tension prédéterminée est prise égale à 0,6 volt.

11. Dispositif selon l'une des revendications précédentes, **caractérisé par le fait que** les premiers transistors sont des transistors NMOS tandis que les deuxièmes transistors sont des transistors PMOS.

**Patentansprüche**

1. Gleichrichtervorrichtung mit zwei Eingangsklemmen (BE1, BE2) für eine Wechselspannung, Mitteln zur Gleichrichtung, hergestellt in einer in ein Halbleiter-Substrat (SBS) integrierten Technik, und zwei Ausgangskiemmen (BS1, BS2) für eine gleichgerichtete Spannung, wobei eine dieser Ausgangsklemmen (BS1) im Bereich des Substrats angeschlossen ist und die Mittel zur Gleichrichtung ein Paar erste Feldeffekttransistoren mit widerstandsisolierten Gates (T1, T2), die mit einer ihrer Elektroden (D1, D2), die mit dem Substrat verbunden ist, zwischen den beiden Eingangsklemmen als Diode und in Reihe geschaltet sind, und ein Paar zweite Feldeffekttransistoren mit widerstandsisolierten Gates (T3, T4) umfassen, wobei die Source eines der zweiten Transistoren und das Gate des anderen zweiten Transistors mit einer der Eingangsklemmen und das Gate eines der zweiten Transistoren und die Source des anderen zweiten Transistors mit der anderen Eingangsklemme und die Drains der zwei zweiten Transistoren gemeinsam mit der zweiten Ausgangsklemme verbunden sind, **dadurch gekennzeichnet, dass** die zweiten Transistoren jeweils in gepolten Halbleiter-Substratzellen (CS3, CS4) ausgebildet sind, wobei die ersten und die zweiten Transistoren gegenläufige Kanäle haben und jeder Transistor eine Drain/Source-Stromleitungsspannung hat, die kleiner als eine Schwellenspannung einer mit demselben Transistor verbundenen Stördiode ist.

2. Vorrichtung nach Anspruch 1, **dadurch gekennzeichnet, dass** die Drains (D1, D2) der ersten Transistoren (T1, T2) mit dem Substrat (SBS) und ihre Gates (G1, G2) mit ihren jeweiligen Drains verbunden sind, während ihre Sources (S1, S2) jeweils mit den beiden Eingangsklemmen (BE1, BE2) verbunden sind.

3. Vorrichtung nach Anspruch 1 oder 2, **dadurch gekennzeichnet, dass** die Breite der Kanäle der ersten Transistoren wenigstens 300 Mikrometer beträgt.

4. Gleichrichtervorrichtung mit zwei Eingangsklemmen (BE11, BE12) für eine Wechselspannung, Mitteln zur Gleichrichtung, hergestellt in einer in ein Halbleiter-Substrat (SBS) integrierten Technik, und zwei Ausgangsklemmen (BS11, BS12) für eine gleichgerichtete Spannung, wobei eine dieser Ausgangsklemmen (BS11) im Bereich des Substrats angeschlossen ist und die Mittel zur Gleichrichtung ein Paar erste Feldeffekttransistoren mit widerstandsisolierten Gates (T11, T12) und ein Paar zweite Feldeffekttransistoren mit widerstandsisolierten Gates (T13, T14) umfassen, wobei die Source eines der zweiten Transistoren und das Gate des anderen zweiten Transistors mit einer der Eingangsklemmen verbunden sind und das Gate eines der zweiten Transistoren und die Source des anderen zweiten Transistors mit der anderen Eingangsklemme und die Drains der zwei zweiten Transistoren gemeinsam mit der zweiten Ausgangsklemme verbunden sind, **dadurch gekennzeichnet, dass** eine der Drain- oder Source-Elektroden der ersten Transistoren mit dem Substrat und ihre Gates mit einer gewählten Polarisierungsspannung (VP) verbunden sind und dass die zweiten Transistoren jeweils in gepolten Halbleiter-Substratzellen ausgebildet sind, wobei die ersten und zweiten Transistoren entgegengesetzte Kanäle und eine Drain/Source-Stromleitungsspannung haben, die kleiner ist als eine Schwellenspannung einer mit demselben Transistor verbundenen Diode.

5. Vorrichtung nach Anspruch 4, **dadurch gekennzeichnet, dass** die Drains der ersten Transistoren (T11, T12) mit dem Substrat und ihre jeweilige Source mit den zwei Eingangsklemmen verbunden sind.

6. Vorrichtung nach Anspruch 5, **dadurch gekennzeichnet, dass** die gewählte Polarisationsspannung (VP) kleiner ist als die eigenleitende Schwellenspannung von jedem ersten Transistor.

7. Vorrichtung nach Anspruch 6, **dadurch gekennzeichnet, dass** die gewählte Polarisationsspannung (VP) zwischen einigen Hundert Millivolt, z. B. 400 Millivolt, und einer oberen Grenze liegt, die gleich der eigenleitenden Schwellenspannung des ersten Transistors ist, verringert um einige Hundert Millivolt, z. B. 400 Millivolt.

8. Vorrichtung nach einem der vorhergehenden Ansprüche, **dadurch gekennzeichnet, dass** die Substratzellen der zweiten Transistoren mit der anderen Ausgangsklemme (BS2) verbunden sind.

9. Vorrichtung nach einem der vorhergehenden Ansprüche, **dadurch gekennzeichnet, dass** die vorgewählte Spannung der Schwellenspannung einer Diode, z. B. 0,7 Volt, entspricht.

10. Vorrichtung nach einem der vorhergehenden Ansprüche, **dadurch gekennzeichnet, dass** die vorgewählte Spannung 0,6 Volt beträgt.

11. Vorrichtung nach einem der vorhergehenden Ansprüche, **dadurch gekennzeichnet, dass** es sich bei den ersten Transistoren im NMOS-Transistoren, während es sich bei den zweiten Transistoren um PMOS-Transistoren handelt.

## Claims

1. Voltage rectification device comprising two input terminals (BE1, BE2) for an AC voltage, rectification means produced in integrated technology within a semiconductor substrate (SBS), and two output terminals (BS1, BS2) for a rectified voltage, one of these output terminals (BS1) being taken with the substrate, the rectification means comprising a pair of insulated-gate field-effect transistors (T1, T2) that are mounted as diodes and series-connected between the two input terminals with one of their electrodes (D1, D2) connected to the substrate, and a pair of second insulated-gate field-effect transistors (T3, T4), the source of one of the second transistors and the gate of the other second transistor being connected to one of the input terminals, the gate of one of the second transistors and the source of the other second transistor being connected to the other input terminal, the drains of the two second transistors being connected together to the second output terminal, **characterized in that** the second transistors are placed in biased semiconductor wells (CS3, CS4) respectively, the first and second transistors having channels of opposite type and each transistor having, when conducting, a drain/source voltage below a threshold voltage of a parasitic diode associated with the same transistor.

2. Device according to Claim 1, **characterized in that** the first transistors (T1, T2) have their drains (D1, D2) connected to the substrate (SBS) and their gates (G1, G2) connected to their respective drains, whereas their sources (S1, S2) are connected to the two input terminals (BE1, BE2) respectively.

3. Device according to Claim 1 or 2, **characterized in that** the width of the channels of the first transistors is at least 300 microns.

4. Voltage rectification device, comprising two input terminals (BE11, BE12) for an AC voltage, rectification means produced in integrated technology within a semiconductor substrate (SBS) and two output terminals (BS11, BS12) for a rectified voltage, one of these output terminals (BS11) being taken within the substrate, the rectification means comprising a pair of first insulated-gate field-effect transistors (T11, T12) and a pair of second insulated-gate field-effect transistors (T13, T14), the source of one of the second transistors and the gate of the other second transistor being connected to one of the input terminals, the gate of one of the second transistors and the source of the other second transistor being connected to the other input terminal, the drains of the two second transistors being connected together to the second output terminal, **characterized in that** the first transistors have one of their drain or source electrodes connected to the substrate and their gates connected to a chosen bias voltage (VP) and **in that** the second transistors are placed in biased semiconductor wells respectively, the first and second transistors having channels of opposite type and, when conducting, a drain/source voltage below a threshold voltage of a parasitic diode associated with the same transistor.

5. Device according to Claim 4, **characterized in that** the first transistors (T11, T12) have their drains connected to the substrate and their sources connected to the two input terminals respectively.

6. Device according to Claim 5, **characterized in that** the chosen bias voltage (VP) is below the intrinsic threshold voltage of each first transistor.

7. Device according to Claim 6, **characterized in that** the chosen bias voltage (VP) is between a few hundred millivolts, for example 400 millivolts, and an upper limit equal to the intrinsic threshold voltage of the first transistor less a few hundred millivolts, for example 400 millivolts.

8. Device according to one of the preceding claims, **characterized in that** the welds of the second transistors are connected to the other output terminal (BS2).

9. Device according to one of the preceding claims, **characterized in that** the predetermined voltage is set equal to a threshold voltage of a diode, for example 0.7 volts.

10. Device according to one of the preceding claims, **characterized in that** the predetermined voltage is set equal to 0.6 volts.

11. Device according to one of the preceding claims, **characterized in that** the first transistors are nMOS transistors while the second transistors are pMOS transistors.

FIG.1

FIG.2

FIG.4

FIG.3